# EUROPÄISCHE PATENTSCHRIFT

(11) **EP 4 189 775 B1**
(45) Veröffentlichungstag und Bekanntmachung des Hinweises auf die Patenterteilung: **03.09.2025**
(21) Anmeldenummer: 21745737.3
(22) Anmeldetag: 14.07.2021
(51) Int. Cl.: G05D 1/00, H01Q 15/14, G01S 7/40, G01S 7/41, G01S 13/931, H01Q 1/32, H01Q 3/04, H01Q 3/08, H01Q 15/16

(54) **RADARREFLEKTOR ZUR REFLEXION VON RADARSTRAHLUNG UND SYSTEM ZUR STEUERUNG EINES AUTOMATISIERTEN BETRIEBS EINES KRAFTFAHRZEUGS**
RADAR REFLECTOR FOR REFLECTING RADAR RADIATION AND SYSTEM FOR CONTROLLING AUTOMATED OPERATION OF A MOTOR VEHICLE
RÉFLECTEUR RADAR POUR LA RÉFLEXION D'UN RAYONNEMENT RADAR ET SYSTÈME DE COMMANDE D'UN FONCTIONNEMENT AUTOMATISÉ D'UN VÉHICULE À MOTEUR

(30) Priorität: 30.07.2020 DE 102020120181
(43) Veröffentlichungstag der Anmeldung: 07.06.2023
(73) Patentinhaber: MAN Truck & Bus SE, 80995 München (DE)
(72) Erfinder: KUTTENREICH, Fabian, 80995 München (DE); HOFMANN, Susann, 80995 München (DE)
(74) Vertreter: v. Bezold & Partner Patentanwälte - PartG mbB
(86) Internationale Anmeldenummer: PCT/EP2021/069598
(87) Internationale Veröffentlichungsnummer: WO 2022/023039

(56) Entgegenhaltungen:
- CN-A- 108 427 103
- CN-A- 109 387 812
- CN-U- 210 835 211
- GB-A- 2 291 269
- US-A- 5 424 737

## Beschreibung

Die Erfindung betrifft einen Radarreflektor zur Reflexion von Radarstrahlung und ein System zur Steuerung eines automatisierten Betriebs eines Kraftfahrzeugs, umfassend mindestens einen solchen Radarreflektor und das Kraftfahrzeug.

Aus der Praxis sind Kraftfahrzeuge, beispielsweise Nutzfahrzeuge, bekannt, die ausgebildet sind, eine fest vorgegebene Abfolge von Fahrmanövern automatisiert durchzuführen. Derartige automatisiert betriebene Nutzfahrzeuge kommen vorwiegend in einem vom allgemeinen Straßenverkehr abgetrennten Bereich zum Einsatz, beispielsweise in einem Baustellenbereich. Insbesondere in diesen Baustellenbereichen kann es notwendig sein, die Straßenführung kurzfristig zu ändern. Hierbei stellt sich die Aufgabe, wie eine vom Kraftfahrzeug automatisiert durchzuführende Abfolge von Fahrmanövern durch einen Arbeiter vor Ort möglichst einfach vorgegeben und/oder geändert werden kann.

Aus dem Stand der Technik ist ferner bekannt, den fahrerunabhängigen Betrieb von Fahrzeugen, insbesondere bei der Durchfahrt von Streckenabschnitten erhöhter Unfallgefahr, durch am Straßenrand positionierte Funkbaken zu unterstützen. In diesem Zusammenhang beschreibt das Dokument US 2018/0335781 A1 ein mit einer Bake ausgestattetes, autonom betreibbares Fahrzeug zur bi-direktionalen Kommunikation mit anderen Baken zum Austausch von kontextabhängiger Reiseinformation zur Unterstützung des autonomen Betriebs des Fahrzeugs. Die Reiseinformation kann Handlungsanweisungen umfassen, wie beispielsweise eine vorteilhafte Umfahrung, wenn eine Straßensperre aufgrund eines Unfalls oder einer Straßenblockade vorliegt. Solche Handlungsanweisungen können voreingestellt oder vorprogrammiert sein und sich bereits in einer Bake oder im Betriebssystem des autonomen Fahrzeugs befinden oder können dem autonomen Fahrzeug zur Verfügung gestellt werden. Nachanteilig an den verwendeten Baken ist, dass diese für Arbeiter vor Ort in der Regel aufgrund des fehlenden Expertenwissens schwierig zu handhaben sind, um z. B. in einem Baustellenbereich die Baken an geänderte Verhältnisse, z. B. zur Änderung der Streckenführung und der vorzugebenden Handlungsanweisung, anzupassen.

Das Dokument GB 2 291 269 A offenbart einen spiegelnden Markierungsarray zur Anbringung an einem Objekt mit einer Vielzahl von Eckreflektoranordnungen. Jede Eckreflektoranordnung kann so betrieben werden, dass sie jede auf sie auftreffende Beleuchtungsstrahlung einer vorgegebenen Wellenlänge zu einer Quelle zurückreflektiert. Mittel sind vorgesehen, um jede Eckreflektoranordnung mit einer anderen Geschwindigkeit zu rotieren.

Das Dokument CN 109 387 812 A beschreibt eine InSAR Winkelreflektorvorrichtung mit einer automatischen Anpassungsfunktionalität. Mittels einer Schraube ist ein Azimut-Winkel einer Azimut-Reflektorvorrichtung anpassbar.

CN 108 427 103 A (CN RAILWAY SIYUAN SURVEY & DES) 21. August 2018 (2018-08-21) offenbart einen Eckreflektor zur Kalibrierung von Echosignalen eines Fundamentradars. Der Eckreflektor umfasst eine Metallplattenbaugruppe mit einer unteren Dreieck-förmigen Metallplatte und zwei seitlichen Dreieck-förmigen Metallplatten, eine Einstellvorrichtung zum Einstellen der räumlichen Position der Metallplattenbaugruppe und eine mit der Einstellvorrichtung versehene Basis. Die Einstellvorrichtung umfasst eine Grundplatte, die drehbar auf der Basis angeordnet ist, die Metallplattenanordnung ist drehbar auf der Grundplatte angeordnet, und die Drehachse der Metallplattenanordnung ist senkrecht zu der der Grundplatte. Da die Grundplatte und die Metallplattenbaugruppe drehbar sind und die Drehachse der Metallplattenbaugruppe senkrecht zu der der Grundplatte steht, kann der Winkel der Metallplattenbaugruppe eingestellt werden, und die Rückwärtsstreuungskapazität und Empfindlichkeit der Radarwellen des Eckreflektors werden verbessert. Eine erste rotierende Welle kann in einer Befestigungshülse gleiten, wodurch die Höhenposition der Metallplattenanordnung verändert wird, um einen optimalen Signalempfangspunkt zu finden.

Ferner sind aus dem Stand der Technik Radarreflektoren zur Reflexion von Radarstrahlung für Radaranwendungen bekannt, d.h. Vorrichtungen, die ein besonders starkes Echosignal erzeugen. Radarreflektoren können hierzu mindestens ein um eine zentrale Achse des Radarreflektors rotierbares Reflexionselement zur Reflektion von Radarstrahlung aufweisen. Die bekannten Radarreflektoren sind zwar robust und zeichnen sich durch eine einfache Handhabung aus, sind jedoch in der Regel zur Vorgabe von komplexeren Handlungsanweisungen für automatisiert durchzuführende Fahrmanöver von Kraftfahrzeugen weniger gut geeignet.

Die Aufgabe der Erfindung ist daher, eine verbesserte und einfach an die örtlichen Gegebenheiten anpassbare Technik bereitzustellen, mittels derer einem Kraftfahrzeug Radarsignale übermittelt werden können, vorzugsweise für den automatisierten Betrieb des Kraftfahrzeugs. Diese Aufgaben werden durch einen Radarreflektor und das System mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten allgemeinen Gesichtspunkt der Erfindung wird ein Radarreflektor zur Reflexion von Radarstrahlung bereitgestellt, der mindestens ein um eine zentrale Achse des Radarreflektors rotierbares Reflexionselement zur Reflektion von Radarstrahlung umfasst. Durch das um die zentrale Achse rotierbare Reflexionselement wird zumindest ein Teil der auf den Radarreflektor einfallenden Radarstrahlung reflektiert bzw. zurückgeworfen. In an sich bekannter Weise kann das Reflexionselement dazu beispielsweise eine geeignete Rückstrahlfläche aufweisen, mit einem Oberflächenmaterial oder einer Beschichtung, die vorzugsweise einen im Vergleich zur Oberfläche der weiteren Komponenten des Radarreflektors höheren Reflexionsgrad aufweist.

Der Radarreflektor umfasst ferner eine Einstelleinrichtung zur Veränderung (und optional Parametrisierung) einer Charakteristik eines Radarechos des Radarreflektors, mittels derer zumindest der folgende Parameter veränderbar ist: optional eine Winkelgeschwindigkeit ω einer Rotationsbewegung des mindestens einen Reflexionselements um die zentrale Achse, optional eine effektiven Rückstrahlfläche σ des mindestens einen Reflexionselements für Radarstrahlung, und eine Befestigungsposition p des mindestens einen Reflexionselements relativ zur zentralen Achse. Unter dem Begriff des Radarechos wird die von Radarreflektor reflektierte Strahlung verstanden. Die Befestigungsposition p des mindestens einen Reflexionselements relativ zur zentralen Achse kann den radialen Abstand des mindestens einen Reflexionselements relativ zur zentralen Achse und/oder eine Position des Reflexionselements in Achsrichtung der zentralen Achse umfassen. Anders ausgedrückt ist die Einstelleinrichtung so ausgebildet, dass mit der Einstelleinrichtung ein aktueller Wert mindestens eines der Parameter ω, σ und p veränderbar ist, um auf diese Weise eine Charakteristik des vom Radarreflektor in Reaktion auf einfallende Radarstrahlung erzeugten Radarechos zu verändern. Eine veränderte Charakteristik des Radarechos bedeutet, dass sich die Signalcharakteristik, d. h. sich die Signaleigenschaften des Radarechos aus Sicht eines Empfängers des Radarechos geändert haben, auch wenn die ausgesendete Radarstrahlung bzw. die auf den Radarreflektor eintreffende Radarstrahlung unverändert geblieben ist. Durch verschiedene Werte von ω, σ und p ist somit mittels der Einstelleinrichtung ein charakteristisches Reflexionsverhalten erzeugbar.

Ein solcher Radarreflektor, dessen charakteristisches Radarecho veränderbar ist, ist besonders vorteilhaft, um mittels dem erzeugten Radarecho Handlungsanweisungen, vorzugsweise Fahrmanöverbefehle, für den automatisierten Betrieb von Kraftfahrzeugen vorzugeben, wenn fahrzeugseitig einem bestimmten charakteristischen Radarecho jeweils eine vorbestimmte Handlungsanweisung, vorzugsweise Fahrmanöverbefehl, zugeordnet ist. Dies bedeutet, dass das Kraftfahrzeug ausgebildet sein kann, eine vorgegebene Abfolge von Fahrmanövern automatisiert durchzuführen, insbesondere in Abhängigkeit von empfangenen Radarechos.

Mit einem einzigen erfindungsgemäßen Radarreflektor können nämlich wahlweise mehrere unterschiedliche Handlungsanweisungen, vorzugsweise Fahrmanöverbefehle, indirekt vorgeben werden, d. h. durch die jeweils eingestellten Werte der Parameter ω, σ und p und die entsprechend erzeugte Charakteristik des Radarechos kodifiziert werden.

Der Radarreflektor ist vorzugsweise ein mobiler, z. B. tragbar oder verfahrbar ausgeführter Radarreflektor, was die Positionierung an unterschiedlichen Einsatzorten erleichtert. Der Radarreflektor ist vorzugsweise ein passiver Radarreflektor.

Gemäß einer besonders vorteilhaften Ausführungsform können mittels der Einstelleinrichtung mindestens zwei der Parameter ω, σ und p zur Veränderung und/oder Parametrisierung der Charakteristik des Radarechos des Radarreflektors veränderbar sein. Dies erhöht die Anzahl der erzeugbaren unterschiedlichen Radarecho-Charakteristiken. Vorzugsweise können alle drei Parameter ω, σ und p zur Veränderung und/oder Parametrisierung der Charakteristik des Radarechos des Radarreflektors veränderbar sein. Einem bestimmten, mittels der Einstelleinrichtung einstellbaren charakteristischen Radarecho ist dabei ein bestimmtes Werte- Tupel der Parameter ω, σ und p zugeordnet. Durch verschiedene Werte von ω, σ und p ist ein charakteristisches Reflexionsverhalten erzeugbar. Auf diese Weise lassen sich eine besonders große Anzahl an verschiedenen charakteristischen Radarechos mittels relativ einfacher konstruktiver Maßnahmen erzeugen, was den technischen Aufwand reduziert.

Die Einstelleinrichtung kann mehrere Einstellkomponenten umfassen, die jeweils zur Einstellung einer der Parameter ω, σ und p vorgesehen sind.

In einer Ausführungsform ist zur Einstellung der Befestigungsposition p ein radialer Abstand des mindestens einen Reflexionselements zur zentralen Achse mittels der Einstelleinrichtung einstellbar. Der radiale Abstand des Reflexionselements beeinflusst das vom Radarreflektor erzeugte Radarecho. Gemäß einer Weiterbildung des letztgenannten Aspekts kann die Einstelleinrichtung zur Einstellung des radialen Abstands mindestens einen sich in radialer Richtung gegenüber der zentralen Achse erstreckenden Tragarm aufweisen. Die radiale Richtung ist eine Richtung, die senkrecht zur Richtung der zentralen Achse verläuft.

Der Tragarm kann als Teleskoparm ausgeführt sein und an seinem freien Ende das Reflexionselement tragen. Es ist beispielsweise denkbar, dass der Teleskoparm in bestimmten Ausschubpositionen arretierbar ist. Zusätzlich oder alternativ dazu kann das Reflexionselement auf dem Tragarm in radialer Richtung verschieblich gelagert sein. Dazu kann das Reflexionselement beispielsweise in einer arretierbaren Führungsschiene auf dem Tragarm gelagert sein. Die beiden letztgenannten Alternativen stellen konstruktiv besonders einfache, und damit kostengünstige und fehlerunanfällige, Realisierungen der Einstelleinrichtung dar.

Zur Einstellung der Befestigungsposition p ist eine Position in Achsrichtung der zentralen Achse des mindestens einen Reflexionselements mittels der Einstelleinrichtung einstellbar. Erfindungsgemäß, wonach der der Radarreflektor mindestens zwei Reflexionselemente aufweist, ist die Einstelleinrichtung ausgebildet, einen Relativabstand der Reflexionselemente zueinander in Achsrichtung der zentralen Achse zu verändern. Dies führt zu einer gut erkennbaren Veränderung der vom Radarreflektor erzeugten Radarecho-Charakteristik.

Die Einstelleinrichtung weist zur Einstellung der Position in Achsrichtung der zentralen Achse eine Führungsmechanik auf, mittels derer das mindestens eine Reflexionselement entlang der zentralen Achse verschieblich gelagert ist. Z. B. kann die Führungsmechanik als Führungsschiene oder Führungsschlitten ausgeführt sein, entlang derer oder dem das mindestens eine Reflexionselement arretierbar an verschiedenen Positionen festlegbar ist. Die Einstellung verschiedener charakteristischer Radarechos wird somit auf konstruktiv einfache Weise ermöglicht.

Alternativ oder zusätzlich umfasst die Einstelleinrichtung mehrere Einsteck-, Rast- und/oder Klemmpositionen entlang der zentralen Achse, an denen das mindestens eine Reflexionselement selektiv mittelbar oder unmittelbar anbringbar ist. Die Einsteck-, Rast- und/oder Klemmpositionen können z. B. über Klemmschrauben, Steckbolzen, Arretierbolzen realisiert sein, die in entsprechende Bohrungen, Gewindebohrungen, etc. eingreifen und das mindestens eine Reflexionselement entlang der zentralen Achse festlegen. Die Einstellung verschiedener charakteristischer Radarechos wird somit auf konstruktiv einfache Weise ermöglicht.

Der Radarreflektor weist ferner einen Antriebsmotor zur Erzeugung einer Rotation des mindestens einen Reflexionselements um die zentrale Achse auf. Der Antriebsmotor kann z. B. als Elektromotor ausgeführt sein. Die Einstelleinrichtung kann zur Einstellung der Winkelgeschwindigkeit ω ein Bedienelement oder eine Bedienschnittstelle zur Ansteuerung des Antriebsmotors aufweisen, mittels dessen oder über die die Winkelgeschwindigkeit ω stufenlos oder in Stufen einstellbar ist. Das Bedienelement kann dazu bspw. als Kippschalter oder Drehknopf ausgebildet sein. Vorzugsweise weist das Bedienelement eine Skalierung auf, anhand derer die am Reflexionselement hervorgerufene Winkelgeschwindigkeit oder die hervorgerufene Charakteristik des Radarechos oder der übertragene Fahrmanöverbefehl ablesbar ist. Dies vereinfacht die Einstellung und Erzeugung des gewünschten Radarechos weiter.

Der Begriff der effektiven Rückstrahlfläche σ wird in Analogie zu dem in der Radartechnik auch verbreitenden Begriff des Radarquerschnitts verwendet und bezeichnet die für die Reflexion eingehender Radarstrahlung effektive Fläche. Die effektive Rückstrahlfläche hängt beispielsweise ab von der Größe der Rückstrahlfläche des Reflexionselements, dessen Oberflächenmaterial und Beschichtung oder der geometrischen Ausrichtung der Rückstrahlfläche in Bezug zur einfallenden Radarstrahlung.

In weiteren Ausführungsformen ist die Einstelleinrichtung ferner ausgeführt und/oder weist Mittel auf, um die effektive Rückstrahlfläche σ gezielt zu verändern, um auf diese Weise die Charakteristik des Radarechos verändern zu können.

Gemäß einer weiteren Ausführungsform kann die Einstelleinrichtung zur Einstellung der effektiven Rückstrahlfläche σ eine Halterung umfassen, mittels derer eine Schwenkstellung des Reflexionselements um die radiale Richtung veränderbar ist. In anderen Worten kann das Reflexionselement z. B. aus einer im Wesentlichen senkrechten Stellung in Bezug auf eine Radialebene in eine verkippte Stellung gebracht werden, in der die effektive Rückstrahlfläche σ kleiner wird. Die Halterung kann z. B. als arretierbares Winkelscharnier ausgebildet sein.

Alternativ oder zusätzlich kann die Einstelleinrichtung zur Einstellung der effektiven Rückstrahlfläche σ eine Abdeckkappe zur selektiven Anbringung auf einer Rückstrahlfläche des Reflexionselements umfassen, mittels derer ein Teil der Rückstrahlfläche abdeckbar ist. Die Abdeckkappe ist aus einem Material gefertigt, das Radarstrahlung nicht oder zumindest schwächer reflektiert als die Rückstrahlfläche des Reflexionselements, sodass die effektive Rückstrahlfläche des Reflexionselements insgesamt kleiner wird. Die Abdeckkappe kann bspw. mittels Druckknöpfen oder Klettverschluss auf der Rückstrahlfläche angebracht werden. Dieser Aspekt ermöglicht eine besonders einfache, konstruktive Ausführungsform des vorgeschlagenen Radarreflektors und birgt insofern Kostenvorteile.

Alternativ oder zusätzlich kann die Einstelleinrichtung zur Einstellung der effektiven Rückstrahlfläche σ mehrere Reflexionselemente mit unterschiedlicher effektiver Rückstrahlfläche σ umfassen. Beispielsweise können diese mit unterschiedlich großer Rückstrahlfläche oder Rückstrahlflächen aus unterschiedlichem Material ausgebildet sein und gegeneinander austauschbar am Radarreflektor montierbar sein. Auf diese Weise wird eine besonders schnelle Anpassung der Charakteristik des Radarechos ermöglicht.

Gemäß einer weiteren Ausführungsform kann der Radarreflektor einen um die zentrale Achse des Radarreflektors rotierbaren Grundkörper und mindestens einen an dem Grundkörper befestigten sich in radialer Richtung gegenüber der zentralen Achse erstreckenden Tragarm, der das Reflexionselement trägt, umfassen. Der Grundkörper kann z. B. zylinder-, pfosten- oder pylonenförmig ausgebildet sein. Dies vereinfacht den Aufbau des Radarreflektors weiter. Die zentrale Achse ist besonders bevorzugt eine vertikale Achse. Eine Ausführung als horizontale Achse ist beispielsweise auch möglich.

Gemäß einer Weiterbildung der letztgenannten Ausführungsform können mehrere Tragarme am Grundkörper befestigt sein, die jeweils ein Reflexionselement tragen, wobei vorzugsweise die Tragarme, in Umfangsrichtung des Grundkörpers gesehen, äquidistant zueinander angeordnet sind. In anderen Worten können die Tragarme gleichmäßig über den Umfang des Grundkörpers verteilt sein. Dadurch kann die Signalstärke des Radarechos erhöht werden.

Alternativ oder zusätzlich können genau zwei Tragarme am Grundkörper befestigt sein, die jeweils ein Reflexionselement tragen. Vorzugsweise können die Tragarme in Umfangsrichtung des Grundkörpers gesehen, 180° voneinander versetzt und somit in Bezug auf die zentrale Achse gegenüberliegend angeordnet sein. Gemäß einer Weiterbildung des letztgenannten Aspekts kann die Einstelleinrichtung so ausgebildet sein, dass ein axialer Abstand der Tragarme zueinander in Richtung der zentralen Achse veränderbar ist. Alternativ oder zusätzlich kann ein Abstand der Tragarme zueinander in Umfangsrichtung des Grundkörpers gesehen, variabel einstellbar sein, dass diese z. B. anstatt 180° zueinander versetzt, nur noch 90° zueinander versetzt angeordnet sind. Die Einstellung verschiedener charakteristischer Radarechos wird somit auf konstruktiv einfache Weise ermöglicht.

Gemäß einer Weiterbildung der Ausführungsform, bei der mehrere Tragarme am Grundkörper befestigt sind, kann die Einstelleinrichtung zur Einstellung des axialen Abstands der Tragarme eine Führungsmechanik aufweisen, mittels derer die Tragarme entlang der zentralen Achse verschieblich gelagert ist. Z. B. kann die Führungsmechanik als Führungsschiene oder Führungsschlitten ausgeführt sein, entlang derer oder dem das mindestens eine Reflexionselement arretierbar an verschiedenen Positionen festlegbar ist. Die Einstellung verschiedener charakteristischer Radarechos wird somit auf konstruktiv einfache Weise ermöglicht.

Alternativ oder zusätzlich kann die Einstelleinrichtung zur Einstellung des axialen Abstands und/oder des Abstands der Tragarme zueinander in Umfangrichtung des Grundkörpers mehrere Einsteck-, Rast- und/oder Klemmpositionen entlang der zentralen Achse und/oder in Umfangsrichtung des Grundkörpers umfassen, an denen die Tragarme selektiv anbringbar sind. Auf diese Weise wird eine besonders schnelle Anpassung der Charakteristik des Radarechos ermöglicht.

Ferner kann der Radarreflektor Markierungen aufweisen, die am Grundkörper an unterschiedlichen Positionen in Achsrichtung und/oder an dem zumindest einen Tragarm an unterschiedlichen Positionen in radialer Richtung vorgesehen sind, zur Kennzeichnung selektiv einstellbarer Positionen der Reflexionselemente mittels des zumindest einen Tragarms. Die selektiv einstellbaren Positionen können ferner z. B. bestimmten Charakteristiken des Radarechos so festgelegt sein, dass diese bestimmten Fahrmanöverbefehlen zugeordnet sind, was z. B. durch ein Begleithandbuch dokumentiert sein kann. Dies ermöglicht vorteilhaft eine besonders schnelle und einfach umsetzbare Veränderung des charakteristischen Radarechos.

Gemäß einer Weiterbildung der letztgenannten Aspekte kann der Radarreflektor ferner eine, den Grundkörper, den mindestens einen Tragarm und das mindestens eine Reflexionselement umschließende, für Radarstrahlung durchlässige und zumindest teilweise evakuierte Umhausung, vorzugsweise Röhre, weiter vorzugsweise Kunststoffröhre, aufweisen. Unter dem Begriff der teilweisen Evakuation wird hier verstanden, dass der Luftdruck innerhalb der Umhausung niedriger ist, als der außerhalb der Umhausung herrschende Atmosphärendruck. Der Betrieb des Radarreflektors ist dadurch widerstandsarm und wird vor Umwelteinflüssen geschützt, was die Fehleranfälligkeit reduziert.

Gemäß einer weiteren Ausführungsform kann der Radarreflektor ferner ein auf einer Rückseite des mindestens einen Reflexionselements oder auf der Umhausung angeordnetes Photovoltaikmodul zur Stromversorgung des Radarreflektors aufweisen. Das Photovoltaikmodul kann in an sich bekannter Weise dazu ausgebildet sein, Sonnenenergie in elektrischen Strom zur Energieversorgung des Radarreflektors umzusetzen.

Gemäß einer weiteren Ausführungsform kann der Radarreflektor ferner eine Kommunikationsschnittstelle zur drahtlosen Datenkommunikation aufweisen, wobei die Einstelleinrichtung ausgebildet ist, in Abhängigkeit von einem über die Kommunikationsschnittstelle empfangenen Steuerbefehl die Winkelgeschwindigkeit ω zu verändern und/oder den Radarreflektor abzuschalten. Beispielhaft kann der Steuerbefehl mittels der Kommunikationsschnittstelle in Steuerspannungen für den als elektrische Maschine ausgeführten Antriebsmotor umgesetzt werden und eine Veränderung der Winkelgeschwindigkeit hervorrufen. Dies vereinfacht die Bedienung der Einstelleinrichtung.

Der vorgeschlagene Radarreflektor bietet gegenüber bekannten Lösungen den Vorteil, dass das charakteristische Radarecho mittels einfacher konstruktiver Maßnahmen oder Anpassungen der Betriebsparameter des Radarreflektors verändert oder angepasst werden kann. Die Anpassung erfordert insofern kein Expertenwissen. Der vorgeschlagene Radarreflektor eignet sich somit in besonders vorteilhafter Weise für den Einsatz in Umgebungen, in denen die örtlichen Gegebenheiten kurzfristige Anpassungen an den automatisierten Betrieb von Kraftfahrzeugen erfordern, wie beispielsweise in Baustellenbereichen, wobei mittels Radarreflektoren Fahrmanöverbefehle für das Kraftfahrzeug vorgegeben werden sollen. Mittels einer Mehrzahl an Radarreflektoren grundsätzlich gleichen konstruktiven Aufbaus lässt sich über die gezielte Einstellung der o. g. Parameter z. B. auch eine komplexe Bahnführung über eine Mehrzahl nacheinander aufgereihter Radarreflektoren realisieren. Die in ihrer Grundkonfiguration identischen Radarreflektoren bieten gegenüber Radarreflektoren mit unterschiedlichem konstruktiven Aufbau Vorteile bezüglich der Herstellkosten. Insgesamt ergibt sich ein deutlich reduzierter technischer Aufwand bei der Realisierung und Anpassung eines automatisierten Betriebs von Kraftfahrzeugen.

Gemäß einem zweiten allgemeinen Gesichtspunkt der Erfindung wird ein System zur Steuerung eines automatisierten Betrieb eines Kraftfahrzeugs bereitgestellt.

Das System umfasst mindestens einen Radarreflektor wie in diesem Dokument beschrieben, d. h. umfassend eine Einstelleinrichtung zur Veränderung und/oder Parametrisierung einer Charakteristik eines Radarechos des Radarreflektors. Das System umfasst ferner ein Kraftfahrzeug, das einen Radarsensor aufweist und ausgebildet ist, eine vorgegebene Abfolge von Fahrmanövern automatisiert durchzuführen, die zumindest zum Teil durch ein empfangenes Radarecho vorgegeben werden können. Der Radarsensor kann z. B. ausgebildet sein, Radarstrahlung zu senden und ein Radarecho zu empfangen und z. B. an eine Steuereinrichtung des Kraftfahrzeugs zu übermitteln.

Unter dem Begriff des Fahrmanövers können dabei z. B. bestimmte, mit dem Kraftfahrzeug selbst oder mit Anbauten oder mit Nebenaggregaten des Kraftfahrzeugs durchführbare Standard-Manöver, vorzugsweise Anweisungen zu Fahrmanövern, zur lokalen Navigation und Verkehrszeicheninformationen verstanden werden.

Das Kraftfahrzeug ist ferner ausgebildet, ein Radarecho des mindestens einen Radarreflektors zu empfangen, z. B. mittels des Radarsensors, und eine Charakteristik des Radarechos zu bestimmen, z. B. durch Auswertung und Vergleich des empfangenen Radarechos mit hinterlegten Kenngrößen.

Das Kraftfahrzeug ist ferner ausgebildet, den Radarreflektor anhand einer in einer Datenbank hinterlegten Zuordnung zwischen unterschiedlichen Charakteristiken des Radarechos und zugeordneten Kennungen zur Identifizierung des Radarreflektors zu identifizieren.

Gemäß einer weiteren Ausführungsform kann das Kraftfahrzeug ausgebildet sein, in Abhängigkeit von der Identifizierung des Radarreflektors ein Fahrmanöver aus einer Menge an vorbestimmten Fahrmanövern auszuwählen und automatisiert durchzuführen.

Der automatisierte Betrieb des Kraftfahrzeugs kann sich dabei alleine durch eine Aneinanderreihung der Fahrmanöverbefehle ergeben.

Vorstehend wurde bereits festgestellt, dass durch verschiedene Werte von ω, σ und p, die mittels der Einstelleinrichtung am Radarreflektor einstellbar sind, ein charakteristisches Reflexionsverhalten (Radarecho) erzeugbar ist.

Gemäß einer besonders bevorzugten Ausführungsform kann das Kraftfahrzeug ausgebildet sein, zur Bestimmung der Charakteristik des Radarechos anhand des empfangenen Radarechos zumindest eine der folgenden Größen zu bestimmen: eine zeitliche Veränderung, vorzugsweise ein sog. Blinken, des Radarechos, einen über den Dopplereffekt gemessenen tangentialen Geschwindigkeitsbetrag des mindestens einen Reflexionselements, einen Reflexionsgrad oder eine effektive Rückstrahlfläche σ des Radarreflektors, und eine über den Dopplereffekt gemessene tangentialen Geschwindigkeitsdifferenz der Reflexionselemente.

Diese vorstehenden Größen werden durch verschiedene Werte von ω, σ und p beeinflusst.

Die zeitliche Veränderung des Radarechos und einen über den Dopplereffekt gemessenen tangentialen Geschwindigkeitsbetrag des mindestens einen Reflexionselements hängt z. B. von der Winkelgeschwindigkeit ω der Rotationsbewegung des mindestens einen Reflexionselements um die zentrale Achse ab. Eine veränderte effektive Rückstrahlfläche σ des mindestens einen Reflexionselements kann über die vom Radarsensor des Kraftfahrzeugs empfangene Leistungsdichte erfasst werden. Ein Blinken kann z. B. ein Ansteigen und Absinken der Stärke des Radarechos bezeichnen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigen:
- Figur 1: ein System zur Steuerung eines automatisierten Betriebs eines Kraftfahrzeugs gemäß einer Ausführungsform;
- Figur 2: einen Radarreflektor gemäß einer ersten Ausführungsform;
- Figur 3: einen Radarreflektor gemäß einer weiteren Ausführungsform in der Teilansicht;
- Figur 4: einen Radarreflektor gemäß einer weiteren Ausführungsform;
- Figur 5: einen Radarreflektor gemäß einer weiteren Ausführungsform;
- Figur 6: einen Radarreflektor gemäß einer weiteren Ausführungsform.

Gleiche oder funktional äquivalente Elemente sind in allen Figuren mit denselben Bezugszeichen bezeichnet und sind zum Teil nicht gesondert beschrieben.

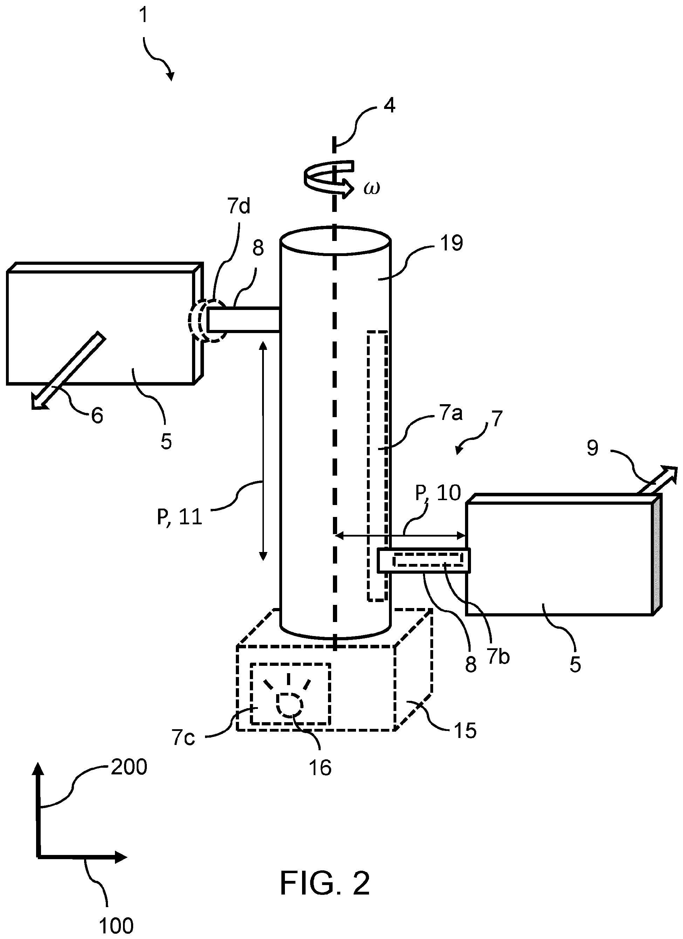

Figur 2 zeigt eine stark schematisierte Darstellung eines Radarreflektors 1 zur Reflexion von Radarstrahlung gemäß einer ersten Ausführungsform. So bezeichnet beispielsweise das Bezugszeichen 1 in allen Ausführungsformen der Figuren 2 bis 6 einen Radarreflektor, der je nach Ausführungsform und Variante verschieden ausgeführt ist.

Der Radarreflektor 1 umfasst einen um eine zentrale vertikale Achse 4 des Radarreflektors 1 rotierbaren Grundkörper 19, zwei drehfest an dem Grundkörper 19 befestigte, sich in radialer Richtung 100 gegenüber der zentralen Achse 4 erstreckende Tragarme 8, die an ihren freien Enden jeweils ein Reflexionselement 5 für Radarstrahlung tragen. Das Reflexionselement 5 kann auch als Radarreflektorflügel bezeichnet werden. Die Tragarme 8 bzw. die Reflexionselemente 5 sind - in Umfangsrichtung des Grundkörpers 19 gesehen - äquidistant zueinander angeordnet, d. h. 180° voneinander versetzt und somit in Bezug auf die zentrale Achse 4 gegenüberliegend angeordnet. Eine Befestigungsposition p der Reflexionselemente 5 relativ zur zentralen Achse 4 ist festgelegt durch den radialen Abstand 10 der Reflexionselemente 5 zur zentralen Achse 4 und durch die axiale Position, d. h. der Position in Achsrichtung 200, der Reflexionselemente 5, insbesondere durch den relativen, axialen Abstand 11 in Achsrichtung 200 der beiden Reflexionselemente 5 zueinander.

Der Grundkörper 19 steht in Antriebsverbindung mit einem Antriebsmotor 15, z. B. ein Elektromotor, über den der Grundkörper und damit der Radarreflektor 1 in Rotationsbewegung um die zentrale vertikale Achse 4 versetzt werden kann. ω bezeichnet die Winkelgeschwindigkeit der Rotationsbewegung um die Achse 4.

Die Reflexionselemente 5 sind zur Reflektion von Radarstrahlung 2 ausgebildet und weisen ein zur Reflexion von Radarstrahlung geeignetes Material auf. In welchem Maß ankommende Radarstrahlung 2 von den Reflexionselementen 5 zurückgeworfen wird, hängt von der effektiven Rückstrahlfläche σ der Reflexionselemente 5 ab. Die effektive Rückstrahlfläche σ wird in der vorliegenden Ausführungsform in Analogie zum in der Radartechnik verbreiteten Begriff des Radarquerschnitts verwendet. Die effektive Rückstrahlfläche σ hängt u.a. ab von der Größe der Seitenflächen und deren Oberflächenmaterial bzw. Beschichtung. Im Betrieb des Radarreflektors 1 drehen sich die Reflexionselemente 5 mit der Winkelgeschwindigkeit ω der Rotationsbewegung um die Achse 4 und werfen entsprechend auf sie einfallende Radarstrahlung zurück.

Das charakteristische Reflexionsverhalten des Radarreflektors 1, d. h. die Charakteristik des Radarechos, hängt davon ab, welche Werte die Parameter ω, σ und p aufweisen. So beeinflussen z. B. die charakteristischen Reflexionswerte der Reflexionselemente 5 die Stärke des Radarechos. Das von einem Radarsensor empfangene Radarecho wird ebenfalls beeinflusst von der geometrischen Anordnung p der Reflexionselemente 5, d. h. der Befestigungsposition p der Reflexionselemente 5 relativ zur zentralen Achse, z. B. des axialen Abstands 11 und/oder des radial Abstands 11 der Reflexionselemente 5. Auch die charakteristische zeitliche Veränderung der Reflexionswerte (auch als "Blinken" bezeichnet) hängt ab von der Winkelgeschwindigkeit ω, mit der sich der effektive Radarquerschnitt durch die Rotationsbewegung um die Achse 4 zeitlich ändert. Ein Vorteil dieser Art von Radarreflektoren 1 ist, dass die tangentiale Geschwindigkeitsdifferenz (2*v=2*ω)*r) der Reflexionselemente 5 über den Dopplereffekt gut mit Radaren zu erfassen sind. Entsprechend kann der tangentiale Geschwindigkeitsbetrag |v| der Reflexionselemente 5 zuverlässig mit dem Dopplereffekt gemessen werden. Die Bezugszeichen 6 und 9 bezeichnen in Figur 2 die tangentialen Geschwindigkeiten der beiden Reflexionselemente 5.

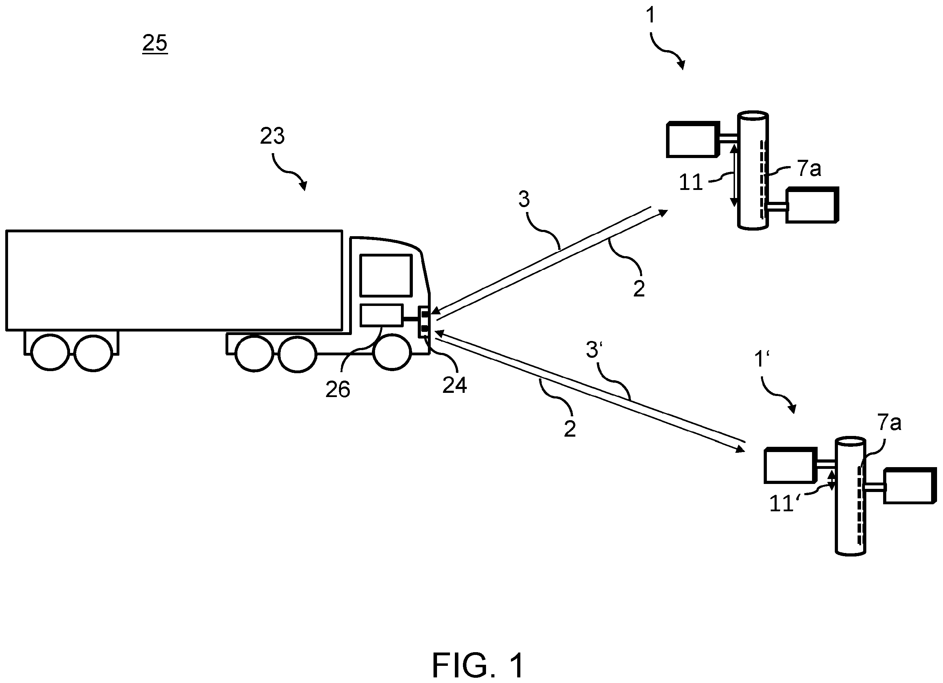

Die Werte der Drehgeschwindigkeit ω, der effektive Rückstrahlfläche σ, der Befestigungsposition p des axialen Abstands 11 und des radial Abstands 11 der Reflexionselemente 5 führen somit zu einem charakteristischen Reflexionsverhalten, d. h. einem charakteristischen Radarecho, des Radarreflektors 1. Mit anderen Worten beschreibt ein Tupel der Parameter ω, σ und p eine identifizierbare Charakteristik eines Reflektors und erlaubt damit eine Zuordnung einer Kennung (ID) zu einem Radarreflektor 1. Ein Kraftfahrzeug 23 mit einem Radarsensor 24 kann somit durch Auswertung des empfangenen Radarechos 3 (vgl. Darstellung in Figur 1) einen bestimmten Radarreflektor 1 anhand seines charakteristischen Reflexionsverhaltens identifizieren, wenn in dem Fahrzeug, z. B. in einer Datenbank, zuvor eine entsprechende Zuordnung zwischen einer Kennung des Radarreflektors 1 und der diesem Radarreflektor 1 zugeordneten charakteristischen Radarechos 3 hinterlegt wurde, was nachfolgend noch in Zusammenhang mit der Figur 1 näher beschrieben wird.

Vorstehend wurde bereits ausgeführt, dass eine Besonderheit des erfindungsgemäßen Radarreflektors 1 darin liegt, dass die Charakteristik des Radarechos 3 des Radarreflektors 1 gezielt verändert werden kann.

Zur Veränderung und/oder Parametrisierung der Charakteristik des Radarechos 3 des Radarreflektors 1 umfasst der Radarreflektor 1 eine Einstelleinrichtung 7, mittels derer zumindest einer der folgenden Parameter ω, σ und p veränderbar ist. Die Einstelleinrichtung 7 kann mehrere Ausführungsformen bzw. Einstellkomponenten 7a, 7b, 7c und 7d umfassen, die jeweils zur Einstellung einer der Parameter ω, σ und p vorgesehen sind. Die in den Figuren gezeigte Einstelleinrichtung 7 kann eine, mehrere oder alle die Ausführungsformen 7a, 7b, 7c und 7d umfassen.

Mittels der Einstelleinrichtung 7a ist der relativen Abstand 11 in Achsrichtung 200 der beiden Reflexionselemente 5 zueinander veränderbar, hier z. B. durch Einstellung der Position in Achsrichtung 200 des rechten Reflexionselements 5.

Mittels der Einstelleinrichtung 7b ist der radiale Abstand 10 der beiden Reflexionselemente 5 zur zentralen Achse 4, d. h. die Position der Reflexionselemente 5 in radialer Richtung 100, veränderbar, wobei dies in Figur 2 der besseren Übersichtlichkeit wegen nur für das rechte Reflexionselement 5 dargestellt ist.

Mittels der Einstelleinrichtung 7c ist die Winkelgeschwindigkeit ω der Rotationsbewegung der Reflexionselemente 5 einstellbar. Hierzu umfasst die Einstelleinrichtung 7c ein Bedienelement 16 zur Ansteuerung des Antriebsmotors 15, um die Winkelgeschwindigkeit ω der Rotationsbewegung der Reflexionselemente 5 einzustellen, z. B. stufenweise einzustellen.

Mittels der Einstelleinrichtung 7d ist eine Schwenkstellung der beiden Reflexionselemente 5 um die radiale Richtung 100 veränderbar, wobei dies in Figur 2 wiederum der besseren Übersichtlichkeit wegen nur für das linke Reflexionselement 5 dargestellt ist.

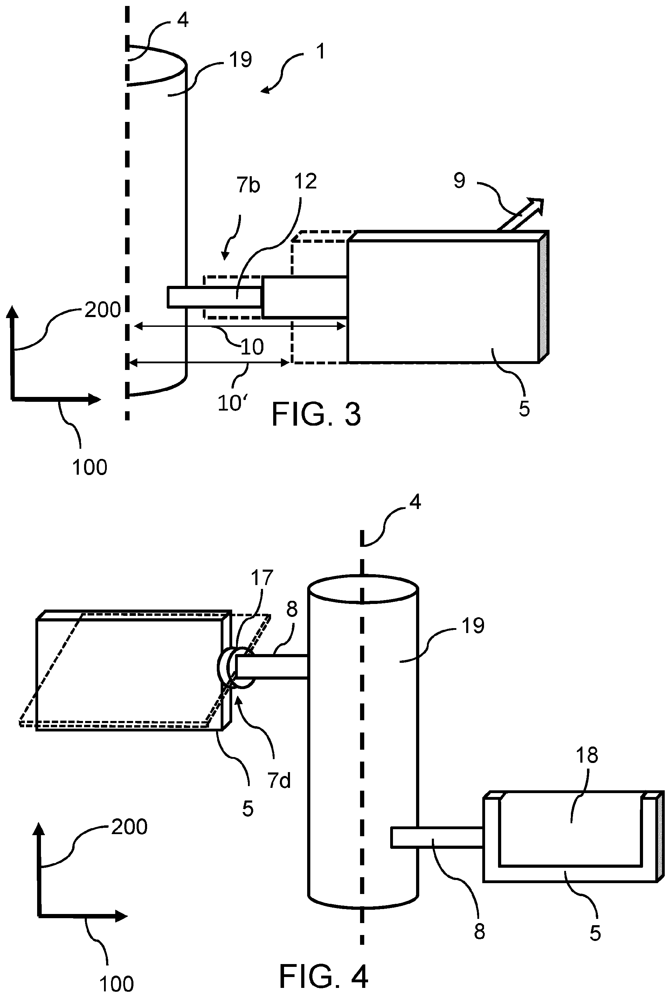

Die Figuren 3 bis 6 zeigen schematisierte Darstellungen weitere Ausführungsvarianten des Radarreflektors 1.

Fig. 3 illustriert eine mögliche Ausführungsform der Einstelleinrichtung 7b zur Einstellung eines radialen Abstands 10 der Reflexionselemente 5 zur zentralen Achse 4 in der Teilansicht. Die Einstelleinrichtung 7b ist hier beispielhaft als Teleskoparm 12 ausgeführt, um die Tragarme 8 der Reflexionselemente 5 auszubilden. Über ein Zusammenschieben des Teleskoparms 12 kann der radiale Abstand 10 des jeweiligen Reflexionselements 5 auf einen radialen Abstand 10' verkürzt werden. Die Veränderung des radialen Abstands 10 zieht (über den bekannten Zusammenhang: *tangentialen Geschwindigkeitsbetrag 9 = Winkelgeschwindigkeit ω * radialer Abstand 10*) eine Änderung des tangentialen Geschwindigkeitsbetrags 9 nach sich, der die Charakteristik des Radarechos 3 beeinflusst. Anhand des tangentialen Geschwindigkeitsbetrags 9 kann der Radarreflektor 1 identifiziert werden.

Fig. 4 zeigt zwei mögliche Ausführungsformen der Einstelleinrichtung 7d zur Einstellung einer effektive Rückstrahlfläche σ des Radarreflektors 1. Die erste Ausführungsform der Einstelleinrichtung 7d umfasst eine Halterung 17, mit der die Reflexionselemente jeweils an einem der Tragarme 8 schwenkbeweglich gehaltert sind. Mittels der Halterung 17 kann die Schwenkstellung der Reflexionselemente 5 um die radiale Richtung 100 verändert werden. In der Folge ändert sich die effektive Fläche zur Reflexion der auftreffenden Radarstrahlung 2. Die effektive Rückstrahlfläche σ kann somit über den Schwenkwinkel verändert werden. Die Halterung 17 kann eine Arretierung umfassen, um die Reflexionselemente 5 jeweils in der gewünschten Schwenkstellung zu fixieren.

Die zweite Ausführungsform der Einstelleinrichtung 7d umfasst eine Abdeckkappe 18, die wahlweise auf dem Reflexionselement 5 angebracht werden kann. Die Abdeckkappe 18 ist hier lösbar am rechten Reflexionselement 5 befestigt. Die Abdeckkappe 18 weist eine Oberfläche auf, die Radarstrahlung 2 weniger stark reflektiert als die Rückstrahlfläche des rechten Reflexionselements 5. Durch Aufbringen der Abdeckkappe 18 wird die effektive Rückstrahlfläche σ der Reflexionselemente 5 insofern kleiner.

Durch gezielte Einstellung der Schwenkstellung der Reflexionselemente 5 und/oder Aufbringen der Abdeckkappen 18 auf die beiden Reflexionselemente 5 können damit charakteristische Radarechos 3 zur Identifizierung des Radarreflektors 1 erzeugt werden.

Es wird betont, dass die Halterung 17 und die Abdeckkappe 18 in Figur 4 der besseren Übersichtlichkeit wegen nur jeweils an einem der Reflexionselemente 5 gezeigt sind. Jedoch kann eine Halterung 17 zur Änderung der Schwenklage jeweils an beiden Reflexionselementen 5 vorgesehen sein. Entsprechendes gilt auch für die Abdeckkappe 18. Ferner können die Halterungen 17 und die Abdeckkappen 18 sowohl zusammen als auch einzeln zum Einsatz kommen.

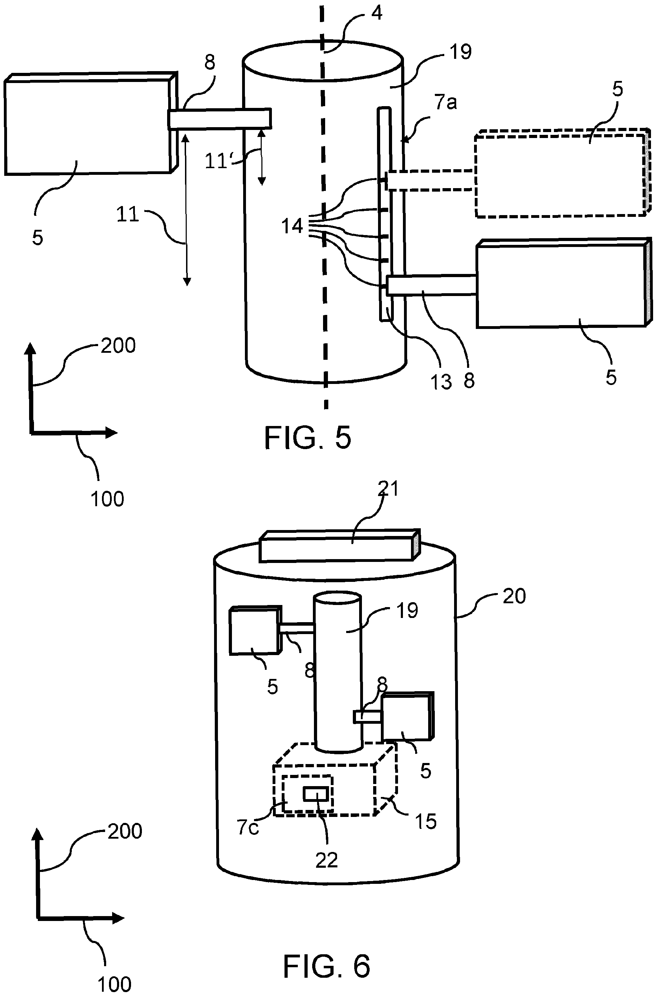

Fig. 5 illustriert eine weitere mögliche Ausführungsform der Einstelleinrichtung 7 zur Einstellung eines axialen Abstands 11 der Reflexionselemente 5.

Die Einstelleinrichtung 7a weist die Führungsmechanik 13 auf, z. B. eine Führungsschiene, mittels derer das rechte Reflexionselement 5 entlang der zentralen Achse 4 des Radarreflektors 1 verschieblich gelagert ist. Die Einstelleinrichtung 7a umfasst alternativ oder zusätzlich mehrere Einsteck-, Rast- und Klemmpositionen 14 entlang der zentralen Achse 4, an denen das mindestens eine Reflexionselement 5 selektiv unmittelbar anbringbar ist.

Fig. 6 zeigt eine weitere Ausführungsform des Radarreflektors 1.

Der Radarreflektor 1 weist eine, den Grundkörper 19, die beiden Tragarme 8 und die Reflexionselemente 5 umschließende, für Radarstrahlung 2 durchlässige und zumindest teilweise evakuierte als Kunststoffröhre ausgeführte Umhausung 20 auf. Das Innenvolumen der Umhausung 20 weist einen im Vergleich zur Umgebung niedrigeren Luftdruck auf. Der Betrieb des Radarreflektors 1 kann somit besonders widerstandsarm und vor Umwelteinflüssen geschützt erfolgen.

Auf der Umhausung 20 ist ein Photovoltaikmodul 21 zur Stromversorgung des Radarreflektors 1 angeordnet. Das Photovoltaikmodul 21 ist in an sich bekannter Weise zur Wandlung von Sonnenenergie in elektrischen Strom ausgebildet und dient der autarken Stromversorgung des als elektrische Maschine ausgebildeten Antriebsmotors 15.

Anstelle des Bedienelements 16 umfasst die Einstelleinrichtung 7c zur Veränderung der Winkelgeschwindigkeit ω eine Drahtlos-Kommunikationsdatenschnittstelle 22, die ausgebildet ist, Steuerbefehle zur Ansteuerung des Antriebsmotors 15 und damit zur Einstellung der Winkelgeschwindigkeit ω zu empfangen. Ferner kann der Radarreflektor 1 mittels der Einstelleinrichtung 7c an- und abgeschaltet werden.

Die vorstehend beschriebenen beispielhaften Ausführungsformen des Radarreflektors 1 zeichnen sich somit dadurch aus, dass in Form der Einstelleinrichtung 7 Mittel bereitgestellt werden, mittels derer die Charakteristik des Radarechos 3 des Radarreflektors 1 gezielt verändert werden kann, indem ein Werte-Tupel der Parameter ω, σ und p verändert wird.

Ein derartiger Radarreflektor 1 findet eine vorteilhafte Anwendung in Systemen zur Steuerung eines automatisierten Betriebs eines Kraftfahrzeugs 23. Dies ist beispielhaft in Figur 1 beschrieben. Figur 1 zeigt ein System 25 zur Steuerung eines automatisierten Betriebs eines Kraftfahrzeugs 23 gemäß einer Ausführungsform, wobei Radarreflektoren 1, 1' wie vorstehend beschrieben zum Einsatz kommen.

Hierbei wird Radarstrahlung 2 unter Erzeugung charakteristischer Radarechos 3, 3' durch einen Radarreflektor 1, 1' reflektiert. Aus den Radarechos 3, 3' werden fahrzeugseitig in einem für einen automatisierten Betrieb ausgebildeten Kraftfahrzeug 23 z. B. Fahrmanöver für einen automatisierten Betrieb des Kraftfahrzeug 23 abgeleitet. Ein bestimmtes charakteristische Radarecho 3 steht dabei für ein bestimmtes Fahrmanöver, das vom Kraftfahrzeug 23 automatisiert durchzuführen ist. Die Zuordnung, welches charakteristische Radarecho 3 welchem Fahrmanöver entspricht, ist zuvor im Kraftfahrzeug 23 hinterlegt worden.

Die Zuordnung ist z. B. auch in Form eines Arbeitshandbuches dokumentiert, anhand dessen ein Arbeiter der z. B. auf einer Baustelle dem Kraftfahrzeug 23 eine bestimmte Reihenfolge von Fahrmanövern vorgeben will, ermitteln kann, wie er die Radarreflektoren 1, 1' mittels der Einstelleinrichtung 7 jeweils einstellen muss, damit diese jeweils ein bestimmtes charakteristisches Reflexionsverhalten erzeugen, das dem Fahrmanöverbefehl entspricht, den der Arbeiter vorgeben will. Hier kann einem bestimmten Fahrmanöverbefehl beispielsweise ein bestimmtes Werte-Tupel der Parameter ω, σ und p zugeordnet sein. Entsprechend kann der Arbeiter den Radarreflektor 1 anhand konkreter Vorgaben mittels der Einstelleinrichtung 7, z. B. durch Einstellen der Drehgeschwindigkeit ω oder des axialen Abstands 11 der Reflexionselemente 5 auf vorbestimmten Werte, die einen bestimmten Fahrmanöverbefehl zugeordnet sind, einstellen. Der Radarreflektor 1, 1' erzeugt dann das gewünschte charakteristische Radarechos 3, 3', das vom entsprechend korrespondierend programmtechnisch eingerichteten Kraftfahrzeug 23 anschließend in den zugeordneten Fahrmanöverbefehl umgesetzt wird. Auf diese Weise können z. B. ohne großen Aufwand und insbesondere ohne Expertenwissen Anpassungen an der Vorgabe für den automatisierten Betrieb des Kraftfahrzeugs 23 vorgenommen werden.

Der automatisierte Betrieb des Kraftfahrzeugs 23 wird insofern durch die in einer bestimmten Reihenfolge aufgestellten Radarreflektoren 1, 1' zumindest zum Teil (fern-)gesteuert. Eine gewünschte Route und Verhalten des Kraftfahrzeugs 23 kann auf diese Weise einfach durch Aufstellen derartiger mobiler Radarreflektoren 1, 1' vorgegeben werden und ferner durch Veränderung der Aufstellung und/oder des charakteristischen Radarechos 3, 3' schnell und einfach verändert und angepasst werden.

In der in Fig. 1 gezeigten Ausführungsform umfasst das System 25 lediglich beispielhaft nur zwei Radarreflektoren 1, 1'. Diese unterscheiden sich dadurch, dass diese mittels der Einstelleinrichtung auf unterschiedliche Werte-Tupel der Parameter ω, σ und p eingestellt worden sind, so dass diese unterschiedliche charakteristische Radarechos 3, 3' erzeugen.

Das System 25 umfasst ferner ein Kraftfahrzeug 23, das einen Radarsensor 24 aufweist und ausgebildet ist, eine vorgegebene Abfolge von Fahrmanövern automatisiert durchzuführen. Die Fahrmanöver werden dabei zumindest zum Teil durch die Radarechos 3, 3' der Radarreflektoren 1, 1' vorgegeben. Dies bedeutet, dass das Kraftfahrzeug 23 ausgebildet ist, bei Empfang eines bestimmten Radarechos 3, 3' ein entsprechend zugeordnetes Fahrmanöver durchzuführen.

Der Radarsensor 24 ist ausgebildet, Radarstrahlung 2 zu senden und Radarechos 3, 3' zu empfangen. In der gezeigten Ausführungsform wird die Radarstrahlung 2 beispielhaft von Radarreflektor 1 in charakteristischer Weise unter Erzeugung des Radarechos 3 zurückgeworfen. Der Radarsensor 24 ist ferner ausgebildet, das empfangene Radarecho 3 an eine Steuervorrichtung 26 des Kraftfahrzeugs 23 zu übermitteln. Die Steuervorrichtung 26 ist ausgebildet, eine Charakteristik des Radarechos 3 zu bestimmen.

Zur Bestimmung der Charakteristik des Radarechos 3 anhand des empfangenen Radarechos 3 kann die Steuervorrichtung 26 zumindest eine der folgenden Größen zu bestimmen: eine zeitliche Veränderung, vorzugsweise ein sog. Blinken, des Radarechos 3, einen über den Dopplereffekt gemessenen tangentialen Geschwindigkeitsbetrag des mindestens einen Reflexionselements 5, einen Reflexionsgrad oder eine effektive Rückstrahlfläche σ des Radarreflektors, und eine über den Dopplereffekt gemessene tangentialen Geschwindigkeitsdifferenz der Reflexionselemente 5. Diese vorstehenden Größen werden durch verschiedene Werte von ω, σ und p beeinflusst. Im Rahmen von zuvor durchgeführten Versuchen und Testfahrten kann experimentell ermittelt werden, wie anhand dieser Größen charakteristische Radarechos 3, 3' voneinander unterschieden werden.

In einer Datenbank ist die Zuordnung zwischen unterschiedlichen Charakteristiken der Radarechos 3, 3' und Kennungen der Radarreflektoren 1, 1' und/oder direkt Fahrmanövern hinterlegt. Die Steuervorrichtung 26 nimmt über das empfangene Radarechos 3 und die in der Datenbank hinterlegte Zuordnung eine Identifizierung des Radarreflektors 1 vor. Im gezeigten Beispiel ordnet die Steuervorrichtung 26 das Radarecho 3 also dem Radarreflektor 1 zu.

Das Kraftfahrzeug 23 ist ausgebildet, in Abhängigkeit von der Identifizierung des Radarreflektors 1, 1' ein Fahrmanöver aus einer Menge an vorbestimmten Fahrmanövern auszuwählen und automatisiert durchzuführen.

Im gezeigten Ausführungsbeispiel nähert sich das Kraftfahrzeug 23 zunächst dem Radarreflektor 1 und leitet auf die oben beschriebene Weise ein Fahrmanöver zum automatisierten Betrieb ab. Unter dem Begriff des Fahrmanövers können dabei z. B. bestimmte, mit dem Kraftfahrzeug 23 selbst oder mit Anbauten oder mit Nebenaggregaten des Kraftfahrzeugs 23 durchführbare Standard-Manöver, vorzugsweise Anweisungen zu Fahrmanövern, zur lokalen Navigation und Verkehrszeicheninformationen verstanden werden. Hier wird durch das Kraftfahrzeug 23 aus der Infizierung des Radarreflektors 1 lediglich beispielhaft das zugeordnete Fahrmanöver ausgewählt und durchgeführt, tangential an dem Radarreflektor 1 vorbei zu fahren.

Durch die tangentiale Vorbeifahrt an dem Radarreflektor 1 nähert sich das Kraftfahrzeug 23 dem Radarreflektor 1'. Das Kraftfahrzeug 23 empfängt ein Radarecho 3', dessen Charakteristik sich von der Charakteristik des zuvor empfangenen Radarechos 3 unterscheidet. Das Kraftfahrzeug 23 erkennt, dass das Radarecho 3' von einem anderen Radarreflektor 1' reflektiert wird, hier der Radarreflektor 3' bzw. dass nun ein weiteres Fahrmanöver zum automatisierten Betrieb durchzuführen ist. Hier bewirkt das abgeleitete Fahrmanöver, lediglich beispielhaft, dass das Kraftfahrzeug 23 eine Kurvenfahrt einleitet.

Durch die Kurvenfahrt könnte das Kraftfahrzeug 23 entsprechend in den Nahbereich eines weiteren (hier nicht dargestellten) Radarreflektors 1' gelangen und aus dessen Identifizierung das nächste Fahrmanöver ableiten usw. Aus der sequentiellen Abfolge abgeleiteter Fahrmanöver ergibt sich im gezeigten Ausführungsbeispiel ein vollautomatisierter Betrieb des Kraftfahrzeugs 23. Ein Arbeiter auf einer Baustelle kann somit durch sequentielles Aufstellung mehrerer Radarreflektoren 1, 1' eine Abfolge von gewünschten Fahrmanövern vorgeben, die dann von einem entsprechend eingerichtetem Kraftfahrzeug 23 durchgeführt werden.

### Bezugszeichenliste

- 1, 1': Radarreflektor
- 2: Radarstrahlung
- 3, 3': Radarecho
- 4: Zentrale Achse des Radarreflektors
- 5: Reflexionselement
- 6: Tangentialer Geschwindigkeitsbetrag des ersten Reflexionselements
- 7, 7a...d: Einstelleinrichtung
- 8: Tragarm
- 9: Tangentialer Geschwindigkeitsbetrag des zweiten Reflexionselements
- 10, 10': Radialer Abstand
- 11, 11': Axialer Abstand
- 12: Teleskoparm
- 13: Führungsmechanik
- 14: Einsteck-, Rast und Klemmpositionen entlang zentraler Achse
- 15: Antriebsmotor
- 16: Bedienelement
- 17: Halterung
- 18: Abdeckkappe
- 19: Grundkörper
- 20: Umhausung
- 21: Photovoltaikmodul
- 22: Kommunikationsschnittstelle
- 23: Kraftfahrzeug
- 24: Radarsensor
- 25: System
- 26: Steuervorrichtung
- 100: Radiale Richtung
- 200: Achsrichtung
- p: Befestigungsposition
- σ: Effektive Rückstrahlfläche
- ω: Winkelgeschwindigkeit

## Patentansprüche

1. Radarreflektor (1) zur Reflexion von Radarstrahlung (2), umfassend
mindestens zwei um eine zentrale Achse (4) des Radarreflektors (1) rotierbares Reflexionselemente (5) zur Reflektion von Radarstrahlung (2),
einen Antriebsmotor (15) zur Erzeugung einer Rotation der mindestens zwei Reflexionselemente (5) um die zentrale Achse (4); und
eine Einstelleinrichtung (7) zur Veränderung einer Charakteristik eines Radarechos (3) des Radarreflektors (1), mittels derer ein aktueller Wert des folgenden Parameters veränderbar ist, um auf diese Weise eine Charakteristik des vom Radarreflektor (1) in Reaktion auf einfallende Radarstrahlung (2) erzeugten Radarechos (3) zu verändern, nämlich indem sich Signaleigenschaften des Radarechos (3) aus Sicht eines Empfängers des Radarechos (3) ändern, auch wenn eine ausgesendete Radarstrahlung (2) und auf den Radarreflektor (1) eintreffende Radarstrahlung (2) unverändert geblieben ist:
eine Befestigungsposition p der mindestens zwei Reflexionselemente (5) relativ zur zentralen Achse (4),
wobei zur Einstellung der Befestigungsposition p mittels der Einstelleinrichtung (7; 7a) eine Position in Achsrichtung (200) der zentralen Achse (4) der mindestens zwei Reflexionselemente (5) einstellbar ist, **dadurch gekennzeichnet,**
**dass** die Einstelleinrichtung (7; 7a) ausgebildet ist, einen Relativabstand der mindestens zwei Reflexionselemente (5) zueinander in Achsrichtung der zentralen Achse (4) zu verändern, wobei die Einstelleinrichtung (7; 7a) zur Einstellung der Position in Achsrichtung (200) der zentralen Achse (4)
a) eine Führungsmechanik (13) aufweist, mittels derer die mindestens zwei Reflexionselemente (5) entlang der zentralen Achse (4) verschieblich gelagert sind; und/oder
b) mehrere Einsteck-, Rast- und/oder Klemmpositionen (14) entlang der zentralen Achse (4) umfasst, an denen die mindestens zwei Reflexionselemente (5) selektiv mittelbar oder unmittelbar anbringbar sind..

2. Radarreflektor (1) nach Anspruch 1, wobei mittels der Einstelleinrichtung (7) ferner ein aktueller Wert zumindest eines der folgenden Parameter veränderbar ist:
a) eine Winkelgeschwindigkeit ω einer Rotationsbewegung der mindestens zwei Reflexionselemente (5) um die zentrale Achse (4); und
b) eine effektive Rückstrahlfläche σ der mindestens zwei Reflexionselemente (5) für Radarstrahlung.

3. Radarreflektor (1) nach Anspruch 2, wobei mittels der Einstelleinrichtung (7) mindestens zwei vorzugsweise alle drei, der Parameter ω, σ und p zur Veränderung und/oder Parametrisierung der Charakteristik des Radarechos (3) des Radarreflektors (1) veränderbar sind.

4. Radarreflektor (1) nach einem der vorherigen Ansprüche, wobei zur Einstellung der Befestigungsposition p mittels der Einstelleinrichtung (7; 7b) ein radialer Abstand (10) der mindestens zwei Reflexionselemente (5) zur zentralen Achse (4) einstellbar ist.

5. Radarreflektor (1) nach Anspruch 4, wobei die Einstelleinrichtung (7; 7b) zur Einstellung des radialen Abstands (10) mindestens einen sich in radialer Richtung (100) gegenüber der zentralen Achse (4) erstreckenden Tragarm (8) aufweist,
a) der als Teleskoparm (12) ausgeführt ist und an seinem freien Ende das Reflexionselement (5) trägt, oder
b) auf dem das Reflexionselement (5) in radialer Richtung (100) verschieblich gelagert ist.

6. Radarreflektor (1, 1') nach einem der vorherigen Ansprüche, wenn abhängig von Anspruch 2, wobei die Einstelleinrichtung (7; 7c) zur Einstellung der Winkelgeschwindigkeit ω ein Bedienelement (16) oder eine Bedienschnittstelle zur Ansteuerung des Antriebsmotors (15) aufweist, mittels dessen oder über die die Winkelgeschwindigkeit ω stufenlos oder in Stufen einstellbar ist.

7. Radarreflektor (1) nach einem der vorherigen Ansprüche, wenn abhängig von Anspruch 2, wobei die Einstelleinrichtung (7; 7d) zur Einstellung der effektiven Rückstrahlfläche σ
a) eine Halterung (17) umfasst, mittels derer eine Schwenkstellung des Reflexionselements (5) um die radiale Richtung (100) veränderbar ist; und/oder
b) eine Abdeckkappe (18) zur selektiven Anbringung auf einer Rückstrahlfläche des Reflexionselements (5) umfasst, mittels derer ein Teil der Rückstrahlfläche abdeckbar ist; und/oder
c) mehrere Reflexionselemente (5) mit unterschiedlicher effektiver Rückstrahlfläche σ umfasst, beispielsweise mit unterschiedlich großer Rückstrahlfläche oder Rückstrahlflächen aus unterschiedlichem Material, die gegeneinander austauschbar am Radarreflektor (1, 1') montierbar sind.

8. Radarreflektor (1) nach einem der vorherigen Ansprüche, umfassend
a) einen um die zentrale Achse (4) des Radarreflektors (1) rotierbaren Grundkörper (19),
b) mindestens einen an dem Grundkörper (19) befestigten sich in radialer Richtung (100) gegenüber der zentralen Achse (4) erstreckenden Tragarm (8), der das Reflexionselement (5) trägt.

9. Radarreflektor (1) nach Anspruch 8, wobei
a) mehrere Tragarme (8) am Grundkörper (19) befestigt sind, die jeweils ein Reflexionselement (5) tragen, wobei vorzugsweise die Tragarme (8) in Umfangsrichtung des Grundkörpers (19) gesehen, äquidistant zueinander angeordnet sind; und/oder
b) wobei genau zwei Tragarme (8) am Grundkörper (19) befestigt sind, die jeweils ein Reflexionselement (5) tragen, wobei vorzugsweise die Tragarme (8) in Umfangsrichtung des Grundkörpers (19) gesehen, 180° voneinander versetzt und somit in Bezug auf die zentrale Achse (4) gegenüberliegend angeordnet sind.

10. Radarreflektor (1) nach Anspruch 9, wobei die Einstelleinrichtung (7; 7a; 7b) so ausgebildet ist, dass
a) ein Abstand (11) der Tragarme (8) zueinander in Richtung der zentralen Achse (4) veränderbar ist; und/oder
b) ein Abstand der Tragarme (8) zueinander in Umfangsrichtung des Grundkörpers (19) gesehen, variabel einstellbar ist.

11. Radarreflektor (1) nach Anspruch 10, wobei die Einstelleinrichtung (7; 7a; 7b) zur Einstellung des Abstands der Tragarme zueinander
a) eine Führungsmechanik (13) aufweist, mittels derer die Tragarme (8) entlang der zentralen Achse (4) verschieblich gelagert ist; und/oder
b) mehrere Einsteck-, Rast- und/oder Klemmpositionen (14) entlang und/oder in Umfangsrichtung des Grundkörpers (19) umfasst, an denen die Tragarme (8) selektiv anbringbar sind.

12. Radarreflektor (1, 1') nach einem der Ansprüche 8 bis 11, ferner aufweisend Markierungen, die am Grundkörper (19) an unterschiedlichen Positionen in Achsrichtung (200) und/oder an dem zumindest einen Tragarm (8) an unterschiedlichen Positionen in radialer Richtung (100) vorgesehen sind, zur Kennzeichnung selektiv einstellbarer Positionen der Reflexionselemente (5) mittels des zumindest einen Tragarms (8).

13. Radarreflektor (1) nach einem der Ansprüche 8 bis 12, ferner aufweisend eine, den Grundkörper (19), den mindestens einen Tragarm (8) und die mindestens zwei Reflexionselemente (5) umschließende, für Radarstrahlung (2) durchlässige und zumindest teilweise evakuierte Umhausung (20), vorzugsweise Röhre, weiter vorzugsweise Kunststoffröhre.

14. Radarreflektor (1) nach einem der vorherigen Ansprüche, ferner aufweisend ein auf einer Rückseite der mindestens zwei Reflexionselemente (5) oder auf einer Umhausung (20) nach Anspruch 13 angeordnetes Photovoltaikmodul (21) zur Stromversorgung des Radarreflektors (1).

15. Radarreflektor (1) nach einem der vorherigen Ansprüche, wenn abhängig von Anspruch 2, ferner aufweisend eine Kommunikationsschnittstelle (22) zur drahtlosen Datenkommunikation, wobei die Einstelleinrichtung (7; 7c) ausgebildet ist, in Abhängigkeit von einem über die Kommunikationsschnittstelle (22) empfangenen Steuerbefehl die Winkelgeschwindigkeit ω zu verändern und/oder den Radarreflektor (1) abzuschalten.

## Claims

1. A radar reflector (1) for reflecting radar radiation (2), comprising
at least two reflection elements (5) rotatable about a central axis (4) of the radar reflector (1) for reflecting radar radiation (2),
a drive motor (15) for generating a rotation of the at least two reflection elements (5) about the central axis (4); and
an adjusting device (7) for changing a characteristic of a radar echo (3) of the radar reflector (1), by means of which a current value of the following parameter can be changed, in order to change a characteristic of the radar echo (3) generated by the radar reflector (1) in response to incident radar radiation (2), namely by changing signal properties of the radar echo (3) from the point of view of a receiver of the radar echo (3), even if a transmitted radar beam (2) and a radar beam (2) incident on the radar reflector (1) have remained unchanged:
a mounting position p of the at least two reflection elements (5) relative to the central axis (4),
wherein for setting the mounting position p by means of the adjusting device (7; 7a) a position in the axial direction (200) of the central axis (4) of the at least two reflection elements (5) is adjustable,
**characterised in that**
the adjusting device (7; 7a) is configured to change a relative distance between the at least two reflective elements (5) in the axial direction of the central axis (4),
wherein the adjusting device (7; 7a) for setting the position in the axial direction (200) of the central axis (4)
a) comprises a guide mechanism (13), by means of which the at least two reflective elements (5) are displaceably mounted along the central axis (4); and/or
b) comprises a plurality of insertion, latching and/or clamping positions (14) along the central axis (4), to which the at least two reflection elements (5) can be selectively attached indirectly or directly.

2. Radar reflector (1) according to Claim 1, wherein a current value of at least one of the following parameters can also be changed by means of the adjusting device (7):
a) an angular velocity w of a rotational movement of the at least two reflective elements (5) around the central axis (4); and
b) an effective radar cross section s of the at least two reflective elements (5) for radar radiation.

3. Radar reflector (1) according to claim 2, wherein by means of the adjusting device (7) at least two, preferably all three, of the parameters ω, σ and ρ for changing and/or parameterising the characteristic of the radar echo (3) of the radar reflector (1) can be changed.

4. Radar reflector (1) according to one of the previous claims, wherein a radial distance (10) of the at least two reflection elements (5) to the central axis (4) can be set by means of the adjusting device (7; 7b) for setting the mounting position p.

5. Radar reflector (1) according to claim 4, wherein the adjusting device (7; 7b) for setting the radial distance (10) comprises at least one supporting arm (8) extending in the radial direction (100) with respect to the central axis (4),
a) which is configured as a telescopic arm (12) and carries the reflecting element (5) at its free end, or
b) on which the reflecting element (5) is mounted displaceably in the radial direction (100).

6. Radar reflector (1, 1') according to one of the previous claims, if dependent on claim 2, wherein the adjusting device (7; 7c) for setting the angular velocity ω comprises an operating element (16) or an operating interface for controlling the drive motor (15), by means of which or via which the angular velocity ω is adjustable in steps or in a stepless manner.

7. Radar reflector (1) according to one of the previous claims, if dependent on claim 2, wherein the adjusting device (7; 7d) for setting the effective radar cross-section
a) comprises a holder (17), by means of which a pivoted position of the reflection element (5) can be changed about the radial direction (100); and/or
b) a cover (18) for selective attachment to a retro-reflective surface of the reflective element (5), by means of which a part of the retro-reflective surface can be covered; and/or
c) a plurality of reflective elements (5) with different effective radar cross sections σ, for example with a radar cross section of different size or radar cross sections of different size made of different material, which can be mounted interchangeably on the radar reflector (1, 1').

8. Radar reflector (1) according to one of the previous claims, comprising
a) a base body (19) that can be rotated around the central axis (4) of the radar reflector (1),
b) at least one supporting arm (8) that is fastened to the base body (19) and extends in the radial direction (100) with respect to the central axis (4), which supporting arm carries the reflecting element (5).

9. Radar reflector (1) according to claim 8, wherein
a) a plurality of supporting arms (8) are fastened to the base body (19), each supporting arm carrying a reflecting element (5), wherein the supporting arms (8) are preferably arranged equidistantly from one another, as viewed in the circumferential direction of the base body (19); and/or
b) wherein exactly two supporting arms (8) are fastened to the base body (19), each supporting arm (8) carrying a reflecting element (5), wherein preferably the supporting arms (8), as seen in the peripheral direction of the base body (19), are offset through 180° from one another and are thus arranged opposite one another with respect to the central axis (4).

10. Radar reflector (1) according to claim 9, wherein the adjusting device (7; 7a; 7b) is configured such that
a) a distance (11) between the supporting arms (8) can be changed in the direction of the central axis (4); and/or
b) a distance of the supporting arms (8) from one another, viewed in the peripheral direction of the base body (19), can be adjusted in a variable manner.

11. Radar reflector (1) according to claim 10, wherein the adjusting device (7; 7a; 7b) for setting the distance of the supporting arms from one another
a) comprises a guide mechanism (13), by means of which the supporting arms (8) are displaceably mounted along the central axis (4); and/or
b) comprises a plurality of insertion, latching and/or clamping positions (14) along and/or in the circumferential direction of the base body (19), to which the supporting arms (8) can be selectively attached.

12. A radar reflector (1, 1') according to one of claims 8 to 11, further comprising markings which are provided on the base body (19) at different positions in the axial direction (200) and/or on the at least one supporting arm (8) at different positions in the radial direction (100), for identifying selectively adjustable positions of the reflecting elements (5) by means of the at least one supporting arm (8).

13. Radar reflector (1) according to one of the claims 8 to 12, further comprising a housing (20), preferably a tube, more preferably a plastic tube, enclosing the base body (19), the at least one supporting arm (8) and the at least two reflecting elements (5), which is permeable to radar radiation (2) and is at least partially evacuated.

14. Radar reflector (1) according to one of the previous claims, further comprising a photovoltaic module (21) arranged on a rear side of the at least two reflection elements (5) or on a housing (20) according to claim 13 for supplying power to the radar reflector (1).

15. Radar reflector (1) according to one of the previous claims, if dependent on claim 2, further comprising a communication interface (22) for wireless data communication, wherein the adjusting device (7; 7c) is configured to change the angular velocity w and/or to switch off the radar reflector (1) in dependence on a control command received via the communication interface (22).

## Revendications

1. Réflecteur radar (1) pour la réflexion de rayonnement radar (2), comprenant
au moins deux éléments de réflexion (5) pouvant tourner autour d'un axe central (4) du réflecteur radar (1) pour la réflexion de rayonnement radar (2),
un moteur d'entraînement (15) pour générer une rotation des au moins deux éléments de réflexion (5) autour de l'axe central (4) ; et
un dispositif de réglage (7) pour modifier une caractéristique d'un écho radar (3) du réflecteur radar (1), au moyen duquel une valeur actuelle du paramètre suivant peut être modifiée, de manière à modifier une caractéristique de l'écho radar (3) généré par le réflecteur radar (1) en réponse à un rayonnement radar incident (2), à savoir en modifiant les propriétés du signal de l'écho radar (3) du point de vue d'un récepteur de l'écho radar (3), même si un rayonnement radar émis (2) et un rayonnement radar incident (2) sur le réflecteur radar (1) sont restés inchangés :
une position de fixation p des au moins deux éléments de réflexion (5) par rapport à l'axe central (4),
où
pour le réglage de la position de fixation p, une position dans la direction axiale (200) de l'axe central (4) des au moins deux éléments de réflexion (5) peut être réglée au moyen du dispositif de réglage (7 ; 7a), **caractérisé en ce que**
le dispositif de réglage (7 ; 7a) est réalisé pour modifier une distance relative des au moins deux éléments de réflexion (5) l'un par rapport à l'autre dans la direction axiale de l'axe central (4), le dispositif de réglage (7 ; 7a), pour le réglage de la position dans la direction axiale (200) de l'axe central (4)
a) présentant un mécanisme de guidage (13) au moyen duquel les au moins deux éléments de réflexion (5) sont montés coulissants le long de l'axe central (4) ; et/ou
b) comprenant plusieurs positions d'insertion, d'encliquetage et/ou de serrage (14) le long de l'axe central (4), au niveau desquelles les au moins deux éléments de réflexion (5) peuvent être disposés sélectivement de manière directe ou indirecte.

2. Réflecteur radar (1) selon la revendication 1, où une valeur actuelle d'au moins un des paramètres suivants peut en outre être modifiée au moyen du dispositif de réglage (7) :
a) une vitesse angulaire ω d'un mouvement de rotation des au moins deux éléments de réflexion (5) autour de l'axe central (4) ; et
b) une surface équivalente radar σ des au moins deux éléments de réflexion (5) pour le rayonnement radar.

3. Réflecteur radar (1) selon la revendication 2, où au moins deux, de préférence tous les trois, des paramètres ω, σ et p peuvent être modifiés au moyen du dispositif de réglage (7) pour modifier et/ou paramétrer la caractéristique de l'écho radar (3) du réflecteur radar (1).

4. Réflecteur radar (1) selon l'une quelconque des revendications précédentes, où, pour régler la position de fixation p, une distance radiale (10) des au moins deux éléments de réflexion (5) par rapport à l'axe central (4) peut être réglée au moyen du dispositif de réglage (7 ; 7b).

5. Réflecteur radar (1) selon la revendication 4, où le dispositif de réglage (7 ; 7b) pour régler la distance radiale (10) présente au moins un bras porteur (8) s'étendant dans la direction radiale (100) par rapport à l'axe central (4),
a) qui est conçu sous forme de bras télescopique (12) et qui porte l'élément de réflexion (5) à son extrémité libre, ou
b) sur lequel l'élément de réflexion (5) est monté coulissant dans la direction radiale (100).

6. Réflecteur radar (1, 1') selon l'une quelconque des revendications précédentes, lorsqu'elles dépendent de la revendication 2, où le dispositif de réglage (7 ; 7c) pour le réglage de la vitesse angulaire ω présente un élément de contrôle (16) ou une interface de contrôle pour la commande du moteur d'entraînement (15), au moyen duquel ou par l'intermédiaire duquel la vitesse angulaire ω peut être réglée en continu ou par paliers.

7. Réflecteur radar (1) selon l'une quelconque des revendications précédentes, lorsqu'elles dépendent de la revendication 2, où le moyen de réglage (7 ; 7d) pour régler la surface équivalente radar σ
a) comprend un support (17) au moyen duquel une position de pivotement de l'élément de réflexion (5) autour de la direction radiale (100) peut être modifiée ; et/ou
b) comprend un capuchon de recouvrement (18) destiné à être disposé de manière sélective sur une surface équivalente radar de l'élément de réflexion (5), au moyen duquel une partie de la surface équivalente radar peut être recouverte ; et/ou
c) comprend plusieurs éléments de réflexion (5) avec une surface équivalente radar σ différente, par exemple avec une surface équivalente radar de taille différente ou des surfaces équivalentes radar de matériaux différents, qui peuvent être montés de manière interchangeable sur le réflecteur radar (1, 1').

8. Réflecteur radar (1) selon l'une quelconque des revendications précédentes, comprenant
a) un corps de base (19) pouvant tourner autour de l'axe central (4) du réflecteur radar (1),
b) au moins un bras porteur (8) fixé au corps de base (19), s'étendant dans la direction radiale (100) par rapport à l'axe central (4), qui porte l'élément de réflexion (5).

9. Réflecteur radar (1) selon la revendication 8, où
a) plusieurs bras porteurs (8) sont fixés au corps de base (19), qui portent chacun un élément de réflexion (5), les bras porteurs (8) étant de préférence agencés à équidistance les uns des autres, vus dans la direction périphérique du corps de base (19) ; et/ou
b) exactement deux bras porteurs (8) sont fixés au corps de base (19), qui portent chacun un élément de réflexion (5), les bras porteurs (8) étant de préférence décalés de 180° l'un par rapport à l'autre, vus dans la direction périphérique du corps de base (19), et étant ainsi agencés en face l'un de l'autre par rapport à l'axe central (4).

10. Réflecteur radar (1) selon la revendication 9, où le dispositif de réglage (7 ; 7a ; 7b) est réalisé de telle sorte que
a) une distance (11) entre les bras porteurs (8) peut être modifiée dans la direction de l'axe central (4) ; et/ou
b) une distance des bras porteurs (8) l'un par rapport à l'autre, vue dans la direction périphérique du corps de base (19), peut être réglée de manière variable.

11. Réflecteur radar (1) selon la revendication 10, où le moyen de réglage (7 ; 7a ; 7b) pour régler la distance entre les bras porteurs
a) présente un mécanisme de guidage (13) au moyen duquel les bras porteurs (8) sont montés coulissants le long de l'axe central (4) ; et/ou
b) comprend plusieurs positions d'insertion, d'encliquetage et/ou de serrage (14) le long et/ou dans la direction périphérique du corps de base (19), au niveau desquelles les bras porteurs (8) peuvent être disposés de manière sélective.

12. Réflecteur radar (1, 1') selon l'une quelconque des revendications 8 à 11, présentant en outre des marquages qui sont prévus sur le corps de base (19) à différentes positions dans la direction axiale (200) et/ou sur l'au moins un bras porteur (8) à différentes positions dans la direction radiale (100), pour caractériser des positions réglables de manière sélective des éléments de réflexion (5) au moyen de l'au moins un bras porteur (8).

13. Réflecteur radar (1) selon l'une quelconque des revendications 8 à 12, présentant en outre une enceinte (20), de préférence un tube, de préférence encore un tube en matière plastique, qui entoure le corps de base (19), l'au moins un bras porteur (8) et les au moins deux éléments de réflexion (5), qui est perméable au rayonnement radar (2) et qui est au moins partiellement évacuée.

14. Réflecteur radar (1) selon l'une quelconque des revendications précédentes, présentant en outre un module photovoltaïque (21) agencé sur un côté arrière des au moins deux éléments de réflexion (5) ou sur une enceinte (20) selon la revendication 13, pour l'alimentation électrique du réflecteur radar (1).

15. Réflecteur radar (1) selon l'une quelconque des revendications précédentes, lorsqu'elles dépendent de la revendication 2, présentant en outre une interface de communication (22) pour la communication de données sans fil, le dispositif de réglage (7 ; 7c) étant réalisé pour modifier la vitesse angulaire ω et/ou désactiver le réflecteur radar (1) en fonction d'une instruction de commande reçue par l'intermédiaire de l'interface de communication (22).
